(19) Europäisches Patentamt
European Patent Office
Office européen des brevets

(11) Numéro de publication: **0 569 503 B1**

(12) # FASCICULE DE BREVET EUROPEEN

(45) Date de publication de fascicule du brevet: **21.09.94**

(51) Int. Cl.5: **C25D 11/00**, D01F 11/16

(21) Numéro de dépôt: **92905416.1**

(22) Date de dépôt: **31.01.92**

(86) Numéro de dépôt internationale :
**PCT/FR92/00087**

(87) Numéro de publication internationale :
**WO 92/13983 (20.08.92 92/22)**

(54) **PROCEDE DE MODIFICATION DE LA SURFACE DE MATERIAUX CARBONES PAR REDUCTION ELECTROCHIMIOUE DE SELS DE DIAZONIUM, UTILISABLE NOTAMMENT POUR DES FIBRES DE CARBONE DESTINEES A LA REALISATION DE MATERIAUX COMPOSITES, ET MATERIAUX CARBONES AINSI MODIFIES.**

(30) Priorité: **01.02.91 FR 9101172**

(43) Date de publication de la demande:
**18.11.93 Bulletin 93/46**

(45) Mention de la délivrance du brevet:
**21.09.94 Bulletin 94/38**

(84) Etats contractants désignés:
**BE CH DE LI**

(56) Documents cités:

**WORLD PATENTS INDEX LATEST, week 8425, Derwent Publications Ltd., London, GB; AN 84-155581 & JP, 59 082 467 (MITSUBISHI RAYON KK) 12 May 1984 cited in the application, see abstract**

(73) Titulaire: **CENTRE NATIONAL DE LA RECHERCHE SCIENTIFIOUE**
**15, quai Anatole France**
**F-75007 Paris (FR)**

(72) Inventeur: **PINSON, Jean**
**14, rue du Regard**
**F-94120 Fontenay-sous-Bois (FR)**
Inventeur: **SAVEANT, Jean-Michel**
**69, rue Brillat-Savarin**
**F-75013 Paris (FR)**
Inventeur: **HITMI, Rachid**
**18, avenue Pierre-I-de-Serbie**
**F-75016 Paris (FR)**

(74) Mandataire: **Signore, Robert et al**
**c/o BREVATOME**
**25, rue de Ponthieu**
**F-75008 Paris (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).



Rank Xerox (UK) Business Services
(3.10/3.09/3.3.3)

## Description

La présente invention a pour objet un procédé de modification de la surface de matériaux carbonés, utilisable notamment pour modifier des fibres de carbone destinées à la réalisation de matériaux composites.

De façon plus précise, elle concerne un procédé de modification par voie électrochimique de la surface d'un matériau carboné en vue de fixer sur celui-ci des composés par une liaison de covalence. Les composés fixés peuvent servir par exemple à améliorer l'adhérence du matériau à une résine organique constituant la matrice d'un matériau composite qui peut être un polymère thermodurcissable, par exemple une résine époxy, ou un polymère thermoplastique, par exemple un polyamide, un polyéthylène ou un polytétrafluoréthylène. Les composés fixés peuvent être aussi utilisés pour fixer sur le matériau carboné d'autres composés chimiques ou biologiques tels que des protéines et en particulier des enzymes. Les composés fixés peuvent encore jouer le rôle d' agents complexant les métaux ou constituer des monomères polymérisables que l'on peut ensuite transformer en polymère alors qu'ils sont liés au matériau carboné.

Les matériaux composites à base de fibres de carbone sont des matériaux largement utilisés depuis quelques années, en raison de leurs bonnes propriétés mécaniques. Ces matériaux composites comportent généralement une matrice de résine organique renforcée par des fibres de carbone et les propriétés mécaniques du composite sont d'autant meilleures que la décohésion interlaminaire se produit pour une plus forte contrainte de cisaillement et, par conséquent que les fibres de carbone adhèrent mieux à la résine. Aussi, de nombreux procédés ont été proposés pour améliorer l'adhérence des fibres de carbone aux matrices de résine utilisées dans ces matériaux.

Dans la plupart de ces procédés, on améliore l'adhérente en traitant la surface des fibres de carbone par voie chimique ou électrochimique.

Ainsi, le document FR-A- 2 477 593 décrit un procédé consistant à traiter électrochimiquement les fibres dans une solution d'un sulfate ou bisulfate d'ammonium ou de sodium, ce qui conduit à former sur la surface des fibres des groupes tels que $-NH_2$ et $=NH$ dans le cas d'une solution de sulfate ou bisulfate d'ammonium, et à améliorer ainsi l'adhérente des fibres à une matrice de résine synthétique.

Les documents FR-A- 2 564 489 et 2 607 528 décrivent des procédés électrochimiques dans lesquels on greffe des groupes azotées sur les fibres de carbone, par exemple par oxydation d' une solution aqueuse d'un composé aminé.

Un autre document JP-A- 59 82467 décrit le traitement électrochimique de fibres de carbone par réduction cathodique de composés aminés en milieu aqueux.

Les procédés électrochimiques décrits ci-dessus permettent donc de fixer sur la fibre des composés aminés mais il serait d'un grand intérêt de pouvoir fixer sur les matériaux carbonés d'autres composés capables de réagir avec les matrices de résine synthétique ou de conférer aux matériaux carbonés d'autres propriétés.

La présente invention a précisément pour objet un procédé de modification de la surface d'un matériau carboné, qui permet de fixer directement sur celui-ci n'importe quel groupement chimique approprié.

Selon l'invention, le procédé de modification de la surface d'un matériau carboné consiste à greffer sur la surface de ce matériau un groupe aromatique par réduction électrochimique d'un sel de diazonium comportant ce groupe aromatique, en mettant en contact le matériau carboné avec une solution du sel de diazonium dans un solvant aprotique et en polarisant négativement le matériau carboné par rapport à une anode également en contact avec la solution du sel de diazonium.

Dans ce procédé, si l'on suppose que le sel de diazonium répond à la formule $ArN_2^+ X^-$ dans laquelle Ar représente le groupe aromatique du sel de diazonium et $X^-$ représente un anion, la réduction électrochimique du cation diazonium $ArN_2^+$ correspond au schéma réactionnel suivant :

$$ArN_2^+ + 1e^- \rightarrow ArN_2^{\bullet} \rightarrow Ar^{\bullet} + N_2$$

Ainsi, cette réduction du cation diazonium libère le groupe aromatique du sel de diazonium sous la forme de radical libre qui peut attaquer la surface du matériau carboné pour se fixer sur celui-ci.

Toutefois, pour que la réduction électrochimique du sel de diazonium conduise à la fixation du groupe aromatique de ce sel sur la surface du matériau carboné, il est nécessaire de réaliser la réduction dans un milieu aprotique ne contenant ni composé nucléophile, ni composé éthylénique, ni espèce capable de réagir sur le radical neutre plus rapidement que celui-ci ne se fixe sur la surface carbonée, et d'opérer à un potentiel plus négatif que le potentiel de réduction du sel de diazonium.

En effet, sil'on utilisait un solvant protique on ne ferait que réduire la triple liaison du diazonium $-N\equiv N^+$ en hydrazine $-NH-NH_2$. D'autre part, le solvant aprotique doit être aussi mauvais donneur d'atomes d' hydrogène que possible. Si l'on utilisait un solvant bon donneur d'atomes d' hydrogène au lieu d'un solvant aprotique, le radical libre $Ar^\bullet$ produit par réduction électrochimique réagirait avec ce solvant pour former ArH et il ne serait pas fixé sur la surface du matériau carboné. De même si l'on opérait en présence d'un composé nucléophile ou d'un composé éthylénique, le radical libre $Ar^\bullet$ réagirait avec ces composés selon les schémas suivants :

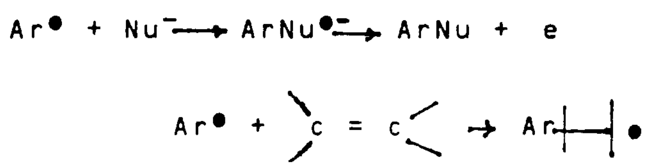

De ce fait, $Ar^\bullet$ ne se fixerait pas non plus sur le matériau carboné.

Le choix des sels de diazonium repose sur le fait qu'ils sont plus facilement réductibles que le radical auquel ils donnent naissance. Seton l'invention, il est donc nécessaire que le potentiel de réduction du sel de diazonium utilisé soit moins négatif que le potentiel de réduction du radical libre $Ar^\bullet$ correspondant au groupe aromatique de ce sel de diazonium.

En effet, si le potentiel de réduction du sel de diazonium était plus négatif que le potentiel de réduction du radical $Ar^\bullet$, le radical libre $Ar^\bullet$ serait réduit en $Ar^-$ lors de la réduction électrochimique du sel de diazonium et $Ar^-$ serait protoné soit par l'eau résiduelle, soit par le solvant lui-même pour former ArH, sans se fixer sur le matériau carboné.

Cette dernière condition portant sur le potentiel de réduction du sel de diazonium est remplie pour pratiquement tous les sels de diazonium.

Dans la formule $ArN_2X$ du sel de diazonium, l'anion $X^-$ peut être n'importe quel anion. Généralement, $X^-$ est un anion inorganique tel que $BF_4^-$,$HSO_4^-$ ou $Cl^-$. On peut toutefois utiliser d'autres anions, par exemple $Br^-$ et $I^-$.

Dans la formule $ArN_2X$ du sel de diazonium, Ar représente comme on l'a vu ci-dessus, un groupe aromatique.

On précise que, selon l'invention, on entend par groupe aromatique un radical dérivé d'un composé cyclique comportant un ou plusieurs noyaux benzéniques indépendants ou condensés, et/ou un ou plusieurs noyaux complexes dérivés du benzène. Ce radical peut bien entendu comporter aussi des noyaux hétérocycliques et/ou divers substituants ainsi que des chaînes hydrocarbonées comportant éventuellement des hétéroatomes tels que N, O et S.

Le choix du groupe aromatique utilisé dépend en particulier de l'utilisation finale du matériau carboné modifié par le procédé de traitement de surface de l'invention.

Pour que l'on puisse réaliser la réduction électrochimique, la solution de sel de diazonium comprend généralement un électrolyte-support approprié, par exemple un sel d'ammonium quaternaire ou un sel de lithium ou de sodium.

A titre d'exemple de sels utilisables comme électrolyte-support, on peut citer les tétrafluoborates, perchlorates, et hexafluorophosphates alcalins ou d'ammonium quaternaire, en particulier le tétrafluoborate de lithium ou un tétrafluoborate de tétralkylammoniun comme le tétrafluoborate de tétrabutylammonium.

Les solvants aprotiques utilisés dans la solution de sel de diazonium peuvent être par exemple l'acétonitrile, le diméthylformamide, le diméthylsulfoxyde ou le benzonitrile. On préfère en général l'acétonitrile ou le benzonitrile.

Pour mettre en oeuvre le procédé de l'invention, on réalise de préférence la réduction électrochimique par voie potentiostatique en portant le matériau carboné à un potentiel plus cathodique que le potentiel de réduction du sel de diazonium, par exemple à un potentiel V égal à $V_o$-500mV avec $V_o$ représentant le potentiel du pic de voltamétrie cyclique du sel de diazonium.

La durée d'électrolyse est choisie de façon à obtenir un recouvrement complet du matériau carboné. Une durée de 5 minutes est généralement suffisante.

Les concentrations en sel de diazonium et en électrolyte-support de la solution sont généralement de $10^{-3}$ à $10^{-1}$mol/l pour le sel et de $10^{-2}$ à 1mol/l pour l'électrolyte-support.

Comme on l'a vu ci-dessus, pour mettre en oeuvre le procédé de l'invention, le sel de diazonium, c'est-à-dire son groupe aromatique, est choisi en fonction des propriétés que l'on veut conférer au matériau

carboné.

Aussi, selon un premier mode de réalisation du procédé de l'invention, destiné plus particulièrement à des matériaux carbonés constitués par des fibres de carbone pour la réalisation de matériaux composites, on choisit un sel de diazonium dont le groupe aromatique comporte, soit un substituant susceptible de réagir directement avec une résine utilisable comme matrice dans un matériau composite, soit un substituant susceptible d'être transformé en substituant comportant un groupe capable de réagir avec une résine utilisable comme matrice dans un matériau composite.

Ainsi, lorsqu'il s'agit d'une matrice à base de résine époxyde, les substituants appropriés capables de réagir directement avec cette matrice peuvent être des substituants $NH_2$.

En effet, de tels substituants réagissent avec le groupe époxyde d'une résine époxyde de la façon suivante :

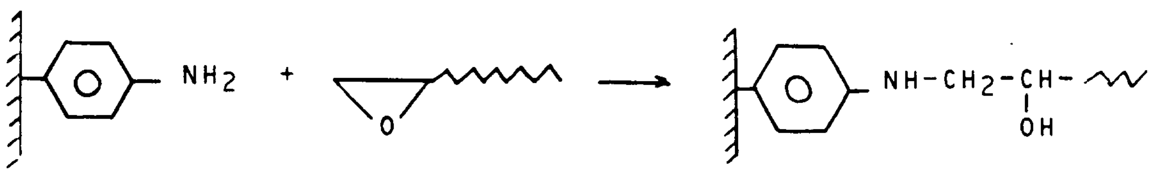

Lorsque la matrice est un polyéthylène, les substituants appropriés capables de réagir directement peuvent être des substituants vinyliques. Lorsque la matrice est un polytétrafluoréthylène, les substituants appropriés capables de réagir directement peuvent être des substituants $-CF=CF_2$.

Dans le cas du polyéthylène, la réaction est la suivante :

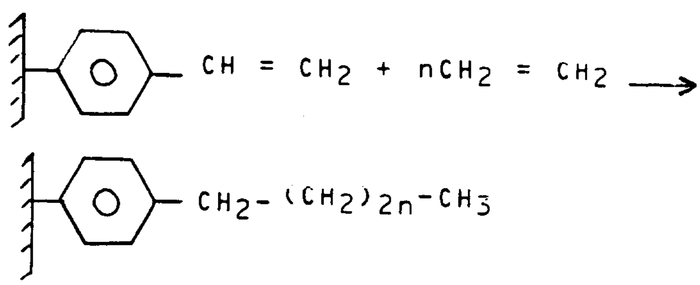

Bien entendu, le groupe aromatique du sel de diazonium peut être de n'importe quel type et comporter éventuellement d'autres substituants que ceux capables de réagir directement avec la matrice d'un matériau composite.

A titre d'exemple de sels de diazonium utilisables pour modifier des fibres de carbone destinées à une matrice de résine époxyde, on peut citer les sels de 4-aminophényldiazonium.

Dans ce premier mode de réalisation de l'invention, on peut aussi utiliser un sel de diazonium comportant un substituant susceptible d'être transformé en groupe capable de réagir avec la résine constituant ta matrice d'un matériau composite.

A titre d'exemple de tels substituants, on peut citer les groupements $NO_2$, COCl, COOH et CN.

En effet, le groupement $NO_2$ peut être transformé en groupement $NH_2$ réactif avec une résine époxyde par réduction électrochimique en milieu protique.

De même, les groupements COCl et COOH peuvent être transformés par réaction chimique avec une diamine en substituant comportant un groupe $NH_2$ selon le schéma suivant :

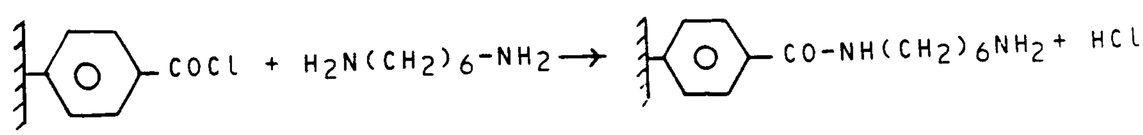

Le groupement CN peut être transformé en un substituant comportant un groupement $NH_2$ par réduction chimique ou électrochimique.

A titre d'exemple de sels de diazonium utilisables pour fixer sur les fibres de carbone un substituant susceptible d'être transformé en substituant comportant un groupe capable de réagir avec la matrice de résine d'un matériau composite, on peut citer les sels de 4-nitrophényldiazonium, de 4-carboxyphényldiazonium, de 4-cyanophényldiazonium et de 4-nitronaphtyldiazonium.

Seton une variante de ce premier mode de réalisation de l'invention, on peut aussi fixer sur le matériau carboné, en particulier sur des fibres de carbone, un groupe aromatique comportant un substituant capable de réagir avec l'un des réactifs monomère ou oligomère utilisable pour la fabrication d'un polymère par polycondensation.

Dans ce cas, on peut ensuite fixer par une liaison de covalence un polymère sur le matériau carboné ainsi modifié en fabriquant le polymère par polycondensation sur le matériau carboné modifié.

A titre d'exemples de substituants convenant pour des polyamides, on peut citer COOH et COCl qui sont capables de réagir avec les diamines, et $NH_2$ qui est capable de réagir avec les diacides.

Dans le cas de -COCl, la fabrication du polyamide sur le matériau carboné modifié correspond aux réactions suivantes :

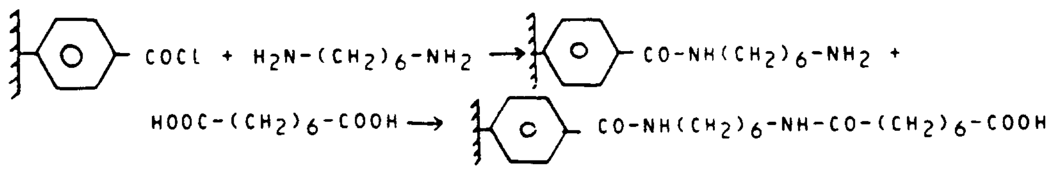

qui peut se répéter plusieurs fois par polymérisation.

Selon un second mode de réalisation de l'invention, destiné plus particulièrement à la fabrication de matériaux ayant une activité chimique, spécifique, par exempte une activité complexante ou une activité catalytique, on choisit un sel de diazonium dont le groupe aromatique présente par lui-même cette activité ou peut être transformé en groupe présentant cette activité.

A titre d'exemples de sels de diazonium utilisables dans ce cas, on peut citer les sels suivants :

- les sels de diazonium comportant un groupe dithizone qui, après fixation sur un matériau carboné tel que des fibres de carbone, peut être transformé chimiquement pour avoir une activité complexante vis-à-vis de métaux tels que le cadmium.

Ceci correspond aux réactions suivantes :

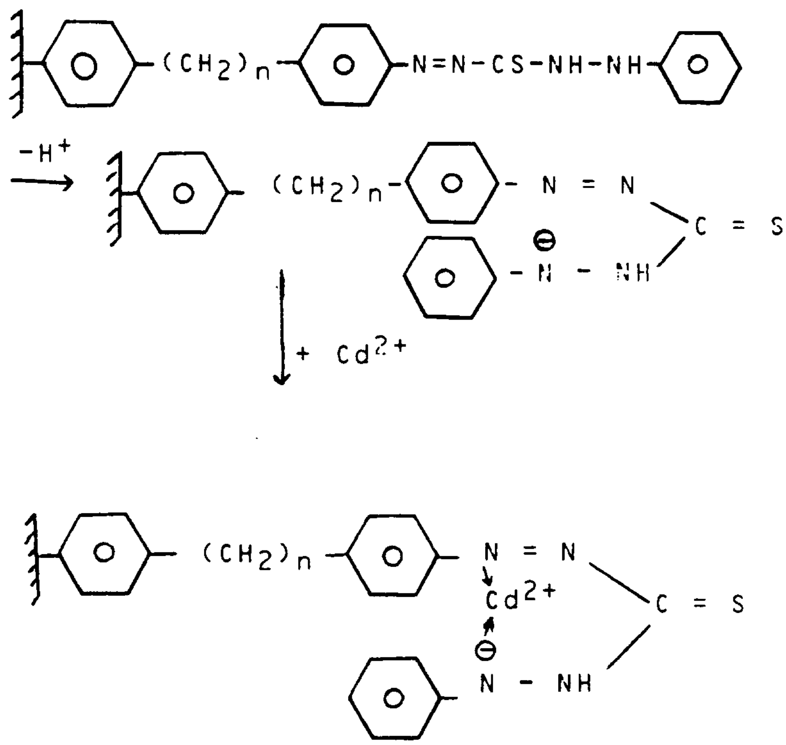


En utilisant ensuite ce matériau carboné sur lequel est fixé $Cd^{2+}$, comme électrode, on peut récupérer le cadmium sous forme de métal par réduction électrochimique.

- les sels de diazonium de formule :

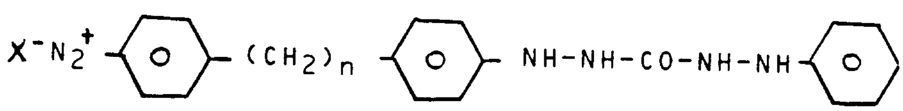

dans laquelle $X^-$ est un anion et n est égal à 0 ou est un nombre entier de 1 à 5, utilisables pour complexer le chrome.

- les sels de diazonium de formule :

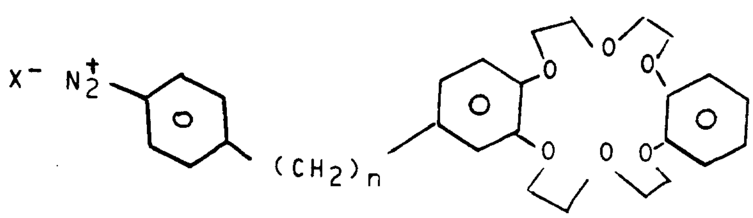

dans laquelle X et n ont la signification donnée ci-dessus, qui comporte un groupe éther-couronne utilisable pour complexer les métaux alcalins.

Selon un troisième mode de réalisation du procédé de l'invention, on choisit un sel de diazonium dont le groupe aromatique comprend un substituant ayant lui-même une activité biologique ou susceptible de réagir avec une molécule à activité biologique, par exemple une protéine et plus particulièrement une enzyme.

A titre d'exemple de sel de diazonium utilisable dans ce cas, on peut citer les sels de 4-carboxyphényldiazonium qui peuvent réagir par leur fonction carboxylique avec une enzyme.

Ceci est très intéressant car on peut ainsi immobiliser des enzymes sur des substrats carbonés et les utiliser dans des réacteurs enzymatiques. Lorsque l'enzyme est une enzyme redox pouvant donner lieu à une catalyse électroenzymatique, on peut de plus régéner l'état d'oxydation initial de l'enzyme par voie électrochimique en utilisant le substrat carboné comme électrode.

Selon un quatrième mode de réalisation du procédé de l'invention, on choisit un sel de diazonium dont le groupe aromatique comporte un monomère utilisable pour la préparation d'un polymère conducteur fixé sur la surface carbonée.

A titre d'exemple d'un tel sel de diazonium, on peut citer le sel de formule suivante :

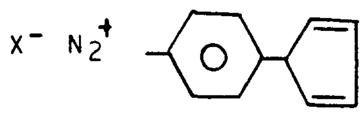

qui permet de fixer sur un substrat carboné plusieurs noyaux pyrrole que l'on peut ensuite polymériser, par exemple par voie électrochimique pour obtenir un substrat recouvert de polypyrrole.

Ceci correspond à la réaction suivante :

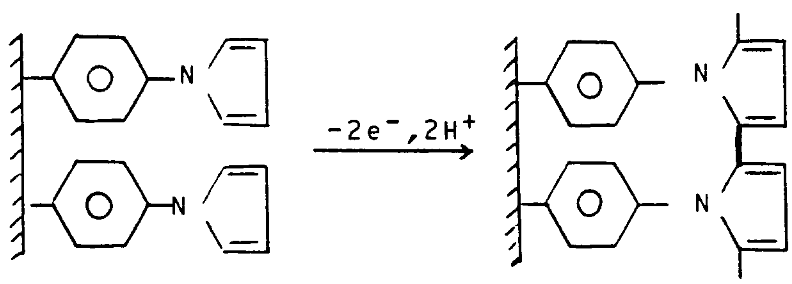


Les matériaux carbonés utilisés dans les différents modes de réalisation de l'invention doivent avoir une réactivité de surface suffisante pour permettre la fixation du groupe aromatique du sel de diazonium par une liaison covalente. Des matériaux carbonés répondant à ces conditions sont le carbone microporeux, les carbones à surface activée , les carbones graphitables à basse température , le carbone vitreux et le graphite pyrolytique.

Ces matériaux peuvent être utilisés sous différentes formes, par exemple sous la forme de fibres, de plaque ou de poudre, selon l'utilisation envisagée.

Dans le premier mode de réalisation de l'invention, on utilise plutôt des fibres de carbone.

Dans les autres modes de réalisation de l'invention, on peut utiliser aussi bien des fibres de carbone, de la poudre de carbone ou une plaque de carbone vitreux.

L'invention concerne également les matériaux carbonés traités par le procédé de l'invention.

Ces matériaux se caractérisent en ce qu'ils comportent sur leur surface des noyaux aromatiques liés directement aux atomes de carbone superficiels du matériau par des liaisons carbone-carbone.

En effet, avec le procédé de l'invention, on obtient une liaison directe entre les atomes de carbone du matériau carboné et les atomes de carbone des noyaux aromatiques du groupe aromatique Ar du sel de diazonium.

En revanche, avec les procédés décrits par FR-A- 2 564 489 et FR-A- 2 607 528, on obtient la fixation de groupes $NH_2$ sur les atomes de carbone superficiels du matériau par des liaisons carbone-azote.

D'autres caractéristiques et avantages de l'invention apparaîtront mieux à la lecture de la description qui suit donnée bien entendu à titre illustratif et non limitatif en référence au dessin annexé sur lequel

- la figure 1 représente de façon schématique une cellule d'électrolyse pour mettre en oeuvre le procédé de l'invention,
- la figure 2 est une courbe de voltamétrie cyclique obtenue avec un matériau carboné modifié au moyen d'un sel de diazonium,

- la figure 3 est une courbe de voltamétrie illustrant la réduction électrochimique du sel de diazonium utilisé pour la figure 2, mais en l'absence de matériau carboné,
- les figures 4 à 6 sont des spectres obtenus en spectroscopie de photoélectrons (ESCA) relatifs à une plaque de carbone vitreux propre non traitée (figure 4), à une plaque trempée dans une solution de sel de 4-nitrophényl diazonium mais qui n'a pas subi d'électrolyse (figure 5) et à la plaque obtenue après le traitement électrochimique (figure 6).
- La figure 7 est une courbe de voltamétrie cyclique illustrant la réduction d'un groupe $NO_2$ fixé sur un matériau carboné et sa transformation en groupe $NH_2$, et
- la figure 8 représente le spectre obtenu en spectroscopie de photoélectrons (ESCA) relatif à une plaque de carbone sur laquelle est fixé un groupement $NH_2$ obtenu par réduction d'un groupement $NO_2$.

Sur la figure 1, on a représenté de façon très schématique une cellule électrochimique utilisable pour mettre en oeuvre le procédé de l'invention. Cette cellule comprend une cuve (1) remplie d'une solution (2) de sel de diazonium dans un solvant aprotique comprenant un électrolyte support, qui est entourée d'une enceinte thermostatée (4) . Une cathode (3) constituée par le matériau carboné à traiter est immergée dans la solution d'électrolyte support et de sel de diazonium (2) et une anode (5) réalisée par exemple en platine est également immergée dans la solution (2). Une électrode de référence (7) constituée par exemple par une électrode au calomel saturé séparée de la solution par un pont électrolytique (8), est également immergée dans la solution (2) et reliée comme la cathode (3) et l'anode (5) à un dispositif potentiostatique (9) qui maintient entre la cathode (3) et l'électrode de référence (7) un potentiel constant, de valeur appropriée, choisi en fonction du sel de diazonium à réduire.

La cellule peut comprendre de plus une conduite (6) pour introduire un gaz tel que l'argon dans la solution (2) afin de désoxygéner la solution.

Les exemples qui suivent illustrent le greffage de composés aromatiques sur une plaque de carbone vitreux de $1cm^2$, une mèche de fibres de carbone ou du carbone pyrolytique par le procédé de l'invention.

**Exemple 1.**

Dans cet exemple, on introduit dans la cuve (1) une solution comprenant $10^{-2}$mol/l de tétrafluoborate de 4-nitrophényldiazonium et $10^{-1}$mol/l de tétrafluoborate de tétrabutylammoniun dans de l'acétonitrile. La cathode (3) est constituée par une plaque de carbone vitreux de $1cm^2$, l'anode (5) est en platine et l'électrode de référence (7) est une électrode au calomel saturé.

Pour réaliser la réduction électrochimique, on applique à la cathode (3) pendant 2min un poten-(7) tout en introduisant de l'argon dans la solution par la conduite (6) et en maintenant la température à 20 ° C.

Après ces 2min d'électrolyse, on retire la cathode (3) et on la rince soigneusement dans l'éthanol sous ultrasons, puis on l'examine par voltamétrie cyclique et par spectroscopie de photoélectrons (ESCA).

La figure 2 représente la courbe de voltamétrie cyclique obtenue avec cette électrode lorsqu'on effectue un balayage vers des potentiels cathodiques (0 à -1,5V) dans une solution contenant de l'acétonitrile et un électrolyte-support constitué par du tétrafluoborate de tétrabutylammonium à une concentration de $10^{-1}$mol/l. Sur cette figure, on voit qu'il n'existe pas de vague correspondant au sel de diazonium mais seulement la présence d'un système réversible sans diffusion qui correspond à la réaction suivante :

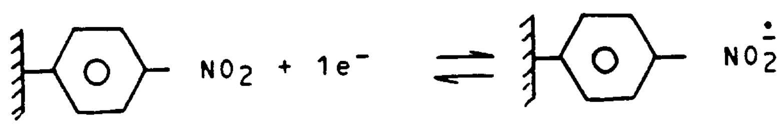

Sur la figure 3, on a représenté à titre comparatif la courbe de voltamétrie cyclique obtenue dans la gamme allant de +0,6V à -2,0V avec une électrode de carbone vitreux soigneusement repolie en utilisant une solution d'acétonitrile contenant $10^{-1}$mol/l de tétrafluoborate de tétrabutylammonium et $10^{-3}$mol/l de tétrafluoborate de 4-nitrophényldiazonium.

Dans ce cas, on observe deux vagues sur la courbe de voltamétrie cyclique. La première vague correspond à la réduction électrochimique du sel de diazonium avec départ d'azote, selon le schéma réactionnel suivant :

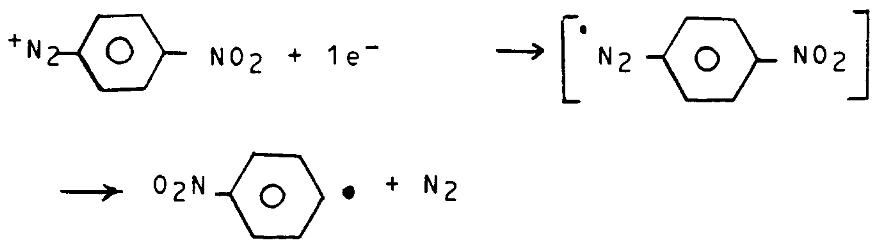

La deuxième vague correspond à la réduction du composé aromatique pour former un radical anion, selon le schéma réactionnel suivant :

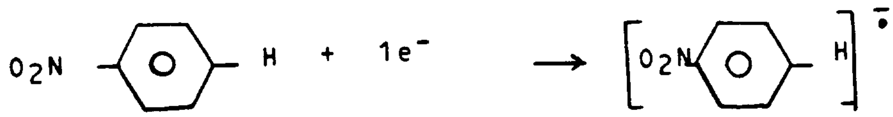

Les figures 4 à 6 représentent les spectres obtenus par spectroscopie de photoélectrons (ESCA) dans le cas de la plaque de carbone vitreux propre de départ (figure 4), dans le cas d'une plaque de carbone vitreux trempée dans la solution du sel de diazonium mais n'ayant pas subi d'électrolyse (figure 5) et dans le cas de l'électrode obtenue en fin d'opération (figure 6).

Sur la figure 4, on observe le pic $N_1$ qui correspond à l'azote contenu dans la plaque de carbone vitreux de départ. Sur la figure 5, on observe trois pics $N_1$, $N_2$ et $N_3$ qui correspondent respectivement à l'azote contenu dans la plaque de carbone vitreux de départ ($N_1$), à l'azote du sel de diazonium ($N_2$) et à l'azote du groupe nitro ($N_3$).

Sur la figure 6, on observe uniquement le pic $N_1$ correspondant à l'azore de la plaque de départ et le pic $N_3$ correspondant au groupe $NO_2$. Ainsi, la figure 6 montre clairement qu'on a bien obtenu la réduction du sel de diazonium ainsi que ta fixation du composé réduit sur la plaque de carbone vitreux.

On vérifie également que le groupe aromatique

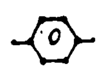

$NO_2$, est bien fixé sur le matériaux carboné en soumettant l'électrode à des lavages répétés dans différents solvants tels que l'éthanol, le méthanol, le benzonitrile, l'acétonitrile, le benzène, le toluène et le dichlorométhane dans une cuve à ultrasons pendant 15min à chaque fois, et en effectuant après ces lavages un nouvel essai en voltamométrie cyclique. Lors de ce nouvel essai, la hauteur du pic correspondant au nitrobenzène ne diminue pas, ce qui montre clairement que le groupe aromatique est solidement fixé. Seule l'abrasion de la surface de l'électrode au moyen d'un papier de verre peut faire disparaître le signal correspondant au groupe aromatique $C_6H_4$-$NO_2$ fixé.

On obtient les mêmes résultats en remplaçant dans cet exemple le carbone vitreux par du carbone pyrolytique.

**Exemple 2.**

Dans cet exemple, on soumet la plaque de carbone vitreux sur laquelle est fixé $C_6H_4NO_2$,obtenue dans l'exemple 1, à un traitement complémentaire pour transformer le groupe $NO_2$ en groupe $NH_2$.

Ceci est réalisé par réduction dans un milieu protique comprenant 50% d'eau et 50% d'éthanol en volume, en réalisant la réduction par voie électrochimique dans une cellule d'électrolyse analogue à celle de la figure 1 et en imposant à la cathode (3) constituée par l'électrode de carbone vitreux sur laquelle est fixé le groupe nitrophényle, un potentiel de -0,6V par rapport à l'électrode de référence (7). Cette réduction est observée par voltamétrie cyclique.

Sur la figure 7, on a représenté la courbe de voltamétrie cyclique obtenue dans ces conditions, pour un balayage dans la gamme de potentiel allant de 0 à -1,6V.

Sur cette figure, on voit que la vague monoélectronique réversible du nitrobenzène en milieu aprotique représentée sur la figure 2, se transforme en une vague irréversible à 6 électrons, qui conduit à la

disparition du groupe $NO_2$.

On peut observer également cette transformation par spectroscopie (ESCA).

Sur la figure 8, on a représenté le spectre obtenu par spectroscopie ESCA. Sur ce spectre, on observe la disparition du groupe $NO_2$ (pic $N_3$ de la figure 6) et l'augmentation du pic $N_1$ qui correspond maintenant à la présence de l'azote dans la plaque et à l'apparition du groupe $NH_2$.

**Exemples 3 à 15.**

Dans ces exemples, on suit le même mode opératoire que dans l'exemple 1 pour fixer sur une plaque de carbone vitreux ou des fibres de carbone utilisées comme cathode, d'autres groupes aromatiques, en utilisant le même solvant aprotique et le même électrolyte-support mais un autre tétrafluoborate de diazonium, avec les mêmes concentrations en électrolyte-support et en sel de diazonium.

Les cations diazonium et les potentiels V utilisés dans ces exemples ainsi que les potentiels $V_o$ correspondant au pic de réduction des tétrafluoborates de diazonium, obtenus par voltamétrie cyclique sont donnés dans le tableau annexé.

Dans ce tableau, on a également reporté les résultats obtenus.

Au vu de ce tableau, on constate que n'importe quel type de sel de diazonium peut être réduit et fixé sur une plaque de carbone vitreux ou des fibres de carbone par le procédé de l'invention.

Ainsi, le procédé de l'invention est très intéressant pour de nombreuses applications puisqu'il permet d'assurer directement ou par une étape complémentaire la fixation de molécules ayant des propriétés particulières sur un support carboné conducteur de l'électricité.

| Ex. | Sel de diazonium | $V_c$/ECS (en V) | V/ECS (en V) | Matériau carboné | Groupe Ar fixe | Vérifications |
|---|---|---|---|---|---|---|
| 1 | 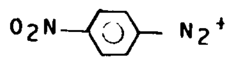 | +0,02 | -0,6 | carbone vitreux et carbone pyrolytique | 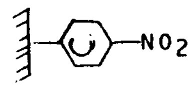 | ESCA [1)] = signal $NO_2$ VC [2)] |
| 3 | " | " | " | fibres de carbone | " | " |
| 4 | 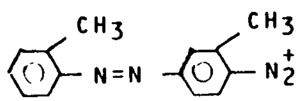 | +0,00 | -0,6 | plaque de C vitreux | 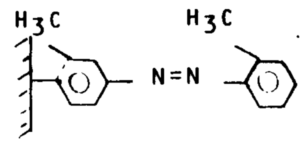 | VC [2)] |
| 5 | " | +0,00 | -0,6 | fibres de carbone | " | VC [2)] |
| 6 | 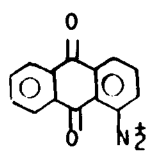 | +0,20 | -0,4 | plaque de C vitreux | 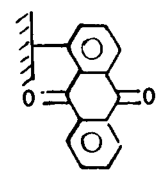 | VC [2)] |
| 7 | " | +0,20 | -0,4 | fibres de carbone | " | VC [2)] |

../

| Ex. | Sel de diazonium | $V_o$/ECS (en V) | V/ECS (en V) | Matériau carboné | Groupe Ar fixe | Vérifications |
|---|---|---|---|---|---|---|
| 8 | 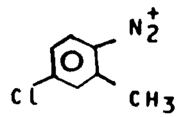 | -0,10 | -0,7 | Plaque de C vitreux | 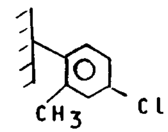 | ESCA[1] = signal Cl |
| 9 | " | -0,10 | -0,7 | fibres de carbone | " | " |
| 10 | 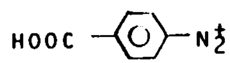 | -0,20 | -0,8 | plaque de C vitreux | 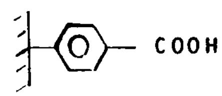 | ESCA[1] = signal COOH |
| 11 | " | -0,20 | -0,8 | fibres de carbone | " | " |
| 12 | 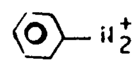 | -0,30 | -0,9 | carbone vitreux - fibres de C | 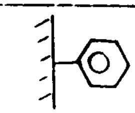 | |
| 13 | 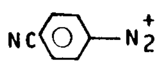 | -0,22 | -0,8 | " | 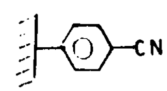 | ESCA[1] = signal CN VC[2] |

../

| Ex. | Sel de diazonium | $V_o$/ECS (en V) | V/ECS (en V) | Matériau carboné | groupe Ar fixé | Vérifications |
|---|---|---|---|---|---|---|
| 14 | 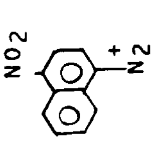 | +0,2 | -0,4 | C vitreux fibres de C | 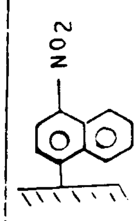 | ESCA[1)] signal $NO_2$ VC[2)] |
| 15 | 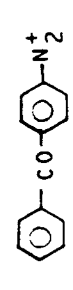 | -0,15 | -0,70 | " | 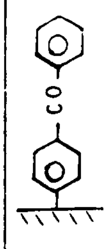 | VC[2)] |

1) ESCA = spectroscopie de photoélectrons

2) VC = voltamétrie cyclique

## Revendications

1. Procédé de modification de la surface d'un matériau carboné, caractérisé en ce qu'il consiste à fixer sur la surface de ce matériau un groupe aromatique par réduction électrochimique d'un sel de

diazonium comportant ce groupe aromatique, en mettant en contact le matériau carboné avec une solution du sel de diazonium dans un solvant aprotique et en polarisant négativement le matériau carboné par rapport à une anode également en contact avec la solution du sel de diazonium.

**2.** Procédé selon la revendication 1, caractérisé en ce que le sel de diazonium répond à la formule $ArN_2X$ dans laquelle Ar représente le groupe aromatique et X représente un anion et en ce que ce sel de diazonium a un potentiel de réduction moins négatif que le potentiel de réduction du radical libre $Ar^o$ correspondant au groupe aromatique du sel de diazonium.

**3.** Procédé selon l'une quelconque des revendications 1 et 2, caractérisé en ce que l'anion X du sel de diazonium est choisi parmi $BF_4^-$, $HSO_4^-$ et $Cl^-$.

**4.** Procédé selon l'une quelconque des revendications 1 à 3, caractérisé en ce que le solvant aprotique est choisi dans le groupe conprenant l'acétonitrile, le diméthylformamide, le diméthylsulfoxyde et le benzonitrile.

**5.** Procédé selon l'une quelconque des revendications 1 à 4, caractérisé en ce que la solution du sel de diazonium comprend un électrolyte-support constitué par un sel d'ammonium quaternaire ou un sel de lithium.

**6.** Procédé selon la revendication 5, caractérisé en ce que l'électrolyte support est un tétrafluoborate de tétralkylammonium.

**7.** Procédé selon l'une quelconque des revendications 1 à 6, caractérisé en ce que le groupe aromatique du sel de diazonium comprend un substituant susceptible de réagir directement avec une résine.

**8.** Procédé selon la revendication 7, caractérisé en ce que le substituant est choisi parmi les groupes $NH_2$, $-CH=CH_2$ et $-CF=CF_2$.

**9.** Procédé selon la revendication 8, caractérisé en ce que le sel de diazonium est un sel de 4-aminophényldiazonium.

**10.** Procédé selon l'une quelconque des revendications 1 à 6, caractérisé en ce que le groupe aromatique comprend un substituant susceptible d'être transformé en substituant comportant un groupe capable de réagir avec une résine.

**11.** Procédé selon la revendication 10, caractérisé en ce que le substituant est choisi parmi $NO_2$, COCl, COOH, CN.

**12.** Procédé selon la revendication 11, caractérisé en ce que le sel de diazonium est un sel de 4-nitrophényldiazonium, 4-carboxyphényldiazonium, 4-cyanophényldiazonium ou 4-nitronaphtyldiazonium.

**13.** Procédé selon l'une quelconque des revendications 1 à 6, caractérisé en ce que le groupe aromatique du sel de diazonium comprend un substituant capable de réagir avec l'un des réactifs monomère ou oligomère utilisable pour la fabrication d'un polymère par polycondensation.

**14.** Procédé selon l'une quelconque des revendications 7 à 13, caractérisé en ce que le matériau carboné est une fibre de carbone.

**15.** Procédé selon la revendication 14, caractérisé en ce que la résine ou le polymère est utilisable comme matrice, dans un matériau composite renforcé par des fibres de carbone.

**16.** Procédé selon l'une quelconque des revendications 1 à 6, caractérisé en ce que le groupe aromatique du sel de diazonium présente une activité complexante ou peut être transformé en groupe présentant une activité complexante.

**17.** Procédé selon l'une quelconque des revendications 1 à 6, caractérisé en ce que le groupe aromatique du sel de diazonium comporte un monomère utilisable pour la préparation d'un polymère conducteur.

18. Procédé selon l'une quelconque des revendications 1 à 6, caractérisé en ce que le groupe aromatique du sel de diazonium comprend un substituant ayant une activité biologique ou susceptible de réagir avec une molécule à activité biologique.

19. Procédé selon l'une quelconque des revendications 1 à 18, caractérisé en ce que le matériau carboné est une poudre de carbone, une fibre de carbone ou une plaque de carbone vitreux.

20. Matériau carboné traité par le procédé selon l'une quelconque des revendications 1 à 19, caractérisé en ce qu'il comporte sur sa surface des noyaux aromatiques liés directement aux atomes de carbone superficiels du matériau par des liaisons carbone-carbone.

**Claims**

1. Process for modifying the surface of a carbon material, characterized in that it consists of fixing to the surface of said material on aromatic group by the electrochemical reduction of a diazonium salt incorporating said aromatic group, by contacting the carbon material with a solution of the diazonium salt in an aprotic solvent and by negatively polarizing the carbon material with respect to an anode which is also in contact with the solution of the diazonium salt.

2. Process according to claim 1, characterized in that the diazonium salt is in accordance with the formula $ArN_2X$, in which Ar represents the aromatic group and X represents an onion and in that said diazonium salt has a less negative reduction potential than the reduction potential of the free radical $Ar^0$ corresponding to the aromatic group of the diazonium salt.

3. Process according to either of the claims 1 and 2, characterized in that the anion X of the diazonium salt is chosen from among $BF_4^-$, $HSO_4^-$ and $Cl^-$.

4. Process according to any one of the claims 1 to 3, characterized in that the aprotic solvent is chosen from within the group including acetonitrile, dimethyl formamide, dimethyl sulphoxide and benzonitrile.

5. Process according to any one of the claims 1 to 4, characterized in that the solution of the diazonium salt comprises an electrolyte-support constituted by a quaternary ammonium salt or a lithium salt.

6. Process according to claim 5, characterized in that the electrolyte-support is a tetraalkyl ammonium tetrafluoborate.

7. Process according to any one of the claims 1 to 6, characterized in that the aromatic group of the diazonium salt comprises a substituent able to react directly with a resin.

8. Process according to claim 7, characterized in that the substituent is chosen from among $NH_2$, $-CH=CH_2$ and $-CF=CF_2$ groups.

9. Process according to claim 8, characterized in that the diazonium salt is a 4-aminophenyl diazonium salt.

10. Process according to any one of the claims 1 to 6, characterized in that the aromatic group comprises a substituent which can be transformed into a substituent having a group able to react with a resin.

11. Process according to claim 10, characterized in that the substituent is chosen from among $NO_2$, COCl, COOH, CN.

12. Process according to claim 11, characterized in that the diazonium salt is a 4-nitrophenyl diazonium, 4-carboxyphenyl diazonium, 4-cyanophenyl diazonium or 4-nitronaphthyl diazonium salt.

13. Process according to any one of the claims 1 to 6, characterized in that the aromatic group of the diazonium salt comprises a substituent able to react with one of the monomeric or oligomeric reagents usable for the production of a polymer by polycondensation.

14. Process according to any one of the claims 7 to 13, characterized in that the carbon material is a carbon fibre.

15. Process according to claim 14, characterized in that the resin or polymer is usable as a matrix in a composite material reinforced by carbon fibres.

16. Process according to any one of the claims 1 to 6, characterized in that the aromatic group of the diazonium salt has a complexing activity or can be transformed into a group having a complexing activity.

17. Process according to any one of the claims 1 to 6, characterized in that the aromatic group of the diazonium salt has a monomer usable for the preparation of a conductive polymer.

18. Process according to any one of the claims 1 to 6, characterized in that the aromatic group of the diazonium salt comprises a substituent having a biological activity or which can react with a molecule having a biological activity.

19. Process according to any one of the claims 1 to 18, characterized in that the carbon material is a carbon powder, a carbon fibre or a vitreous carbon plate.

20. Carbon material treated by the process according to any one of the claims 1 to 19, characterized in that it has on its surface aromatic nuclei directly bonded to the surface carbon atoms of the material by carbon - carbon bonds.

## Patentansprüche

1. Verfahren zur Modifizierung der Oberfläche eines kohlenstoffhaltigen Materials, dadurch gekennzeichnet, daß es darin besteht, auf der Oberfläche dieses Materials eine aromatische Gruppe zu befestigen durch elektrochemische Reduktion eines Diazoniumsalzes, das diese aromatische Gruppe enthält, indem das kohlenstoffhaltige Material mit einer Diazoniumsalzlösung in einem aprotischen Lösungsmittel in Kontakt gebracht wird und indem das kohlenstoffhaltige Material im Verhältnis zu einer Anode, die ebenfalls mit der Diazoniumsalzlösung in Kontakt steht, negativ polarisiert wird.

2. Verfahren nach Anspruch 1, dadurch gekennzeichnet, daß das Diazoniumsalz auf die Formel $ArN_2X$ anspricht, in der Ar die aromatische Gruppe und X ein Anion darstellt, und dadurch, daß dieses Diazoniumsalz ein weniger negatives Reduktionspotential hat, als das Reduktionspotential des freien Radikals $Ar^o$, der der aromatischen Gruppe des Diazoniumsalzes entspricht.

3. Verfahren nach einem der Ansprüche 1 und 2, dadurch gekennzeichnet, daß das Anion X des Diazoniumsalzes unter $BF_4^-$, $HSO_4^-$ und $CL^-$ ausgewählt ist.

4. Verfahren nach einem der Ansprüche 1 bis 3, dadurch gekennzeichnet, daß das aprotische Lösungsmittel aus der Gruppe gewählt ist, die Acetonitril, Dimethylformamid, Dimethylsulfoxyd und Benzonitril umfaßt.

5. Verfahren nach einem der Ansprüche 1 bis 4, dadurch gekennzeichnet, daß die Diazoniumsalzlösung einen Träger-Elektrolyten umfaßt, der aus einem quaternären Ammoniumsalz oder einem Lithiumsalz besteht.

6. Verfahren nach Anspruch 5, dadurch gekennzeichnet, daß der Träger-Elektrolyt ein Tetralkyl-Ammonium-Tetra-Fluoborat ist.

7. Verfahren nach einem der Ansprüche 1 bis 6, dadurch gekennzeichnet, daß die aromatische Gruppe des Diazoniumsalzes einen Substituenten umfaßt, der direkt mit einem Harz reagieren kann.

8. Verfahren nach Anspruch 7, dadurch gekennzeichnet, daß der Substituent aus den Gruppen $NH_2$, $-CH=CH_2$, $-CF=CF_2$ gewählt ist.

9. Verfahren nach Anspruch 8, dadurch gekennzeichnet, daß das Diazoniumsalz ein 4-Amino-Phenyl-Diazonium ist.

10. Verfahren nach einem der Ansprüche 1 bis 6, dadurch gekennzeichnet, daß die aromatische Gruppe einen Substituenten umfaßt, der in einen Substituenten umgewandelt werden kann, der eine Gruppe enthält, die mit einem Harz reagieren kann.

11. Verfahren nach Anspruch 10, dadurch gekennzeichnet, daß der Substituent aus $NO_2$, COCl, COOH, CN ausgewählt ist.

12. Verfahren nach Anspruch 11, dadurch gekennzeichnet, daß das Diazoniumsalz ein 4-Nitro-Phenyl-Diazoniumsalz, 4-Carboxy-Phenyl-Diazoniumsalz, 4-Cyano-Phenyl-Diazoniumsalz oder 4-Nitro-Naphtyl-Diazoniumsalz ist.

13. Verfahren nach einem der Ansprüche 1 bis 6, dadurch gekennzeichnet, daß die aromatische Gruppe des Diazoniumsalzes einen Substituenten umfaßt, der in der Lage ist, mit einem der monomeren oder oligomeren Reagenzien zu reagieren, die für die Herstellung eines Polymers durch Polykondensation verwendet werden können.

14. Verfahren nach einem der Ansprüche 7 bis 13, dadurch gekennzeichnet, daß das kohlenstoffhaltige Material eine Kohlenstoffaser ist.

15. Verfahren nach Anspruch 14, dadurch gekennzeichnet, daß der Harz oder der Polymer als Matrix in einem Verbundmaterial verwendet werden kann, das durch Kohlenstoffasern verstärkt ist.

16. Verfahren nach einem der Ansprüche 1 bis 6, dadurch gekennzeichnet, daß die aromatische Gruppe des Diazoniumsalzes eine kompexbildende Aktivität aufweist oder in eine Gruppe umgewandelt werden kann, die eine komplexbildende Aktivität aufweist.

17. Verfahren nach einem der Ansprüche 1 bis 6, dadurch gekennzeichnet, daß die aromatische Gruppe des Diazoniumsalzes einen Monomer umfaßt, der für die Bereitung eines leitfähigen Monomers verwendet werden kann.

18. Verfahren nach einem der Ansprüche 1 bis 6, dadurch gekennzeichnet, daß die aromatische Gruppe des Diazoniumsalzes einen Substituenten umaßt, der eine biologische Aktivität hat oder mit einem Molekül mit biologischer Aktivität reagieren kann.

19. Verfahren nach einem der Ansprüche 1 bis 18, dadurch gekennzeichnet, daß das kohlenstoffhaltige Material ein Kohlenstoffpulver, eine Kohlenstoffaser oder eine Platte aus glasartigem Kohlenstoff ist.

20. Kohlenstoffhaltiges Material, das mit dem Verfahren nach einem der Ansprüche 1 bis 19 behandelt wird, dadurch gekennzeichnet, daß es auf der Oberfläche aromatische Kerne umfaßt, die mit den oberflächlichen Kohlenstoffatomen des Materials direkt über Kohlenstoff-Kohlenstoffverbindungen verbunden sind.

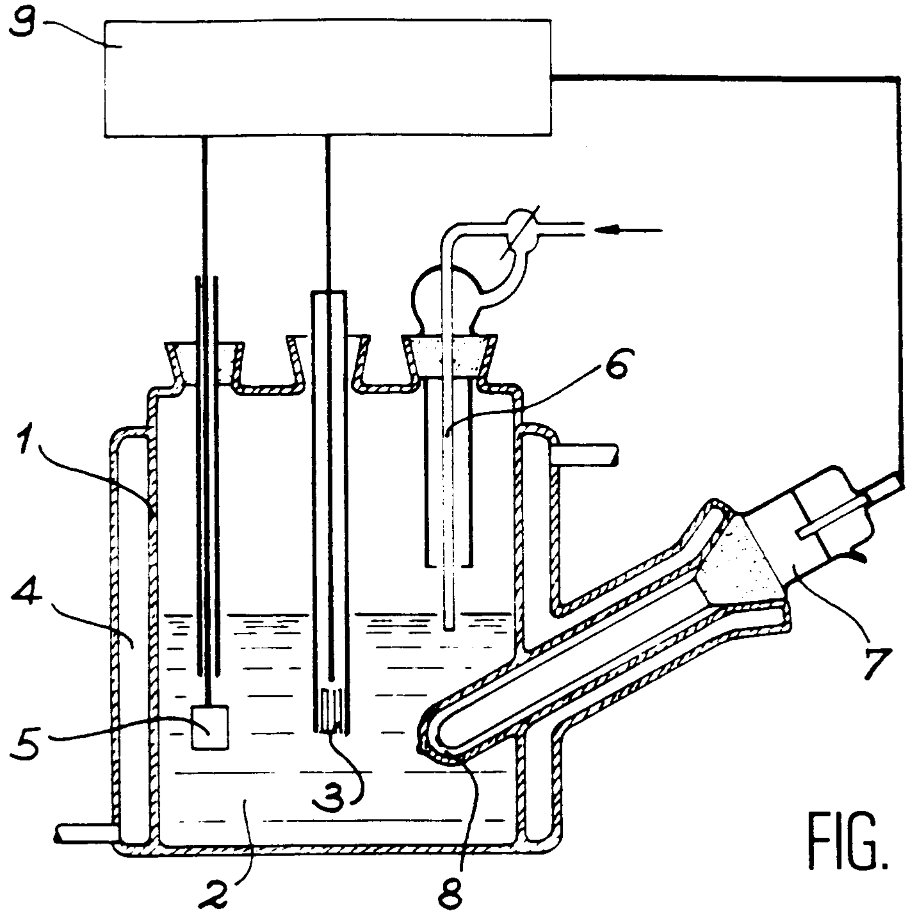


FIG. 1

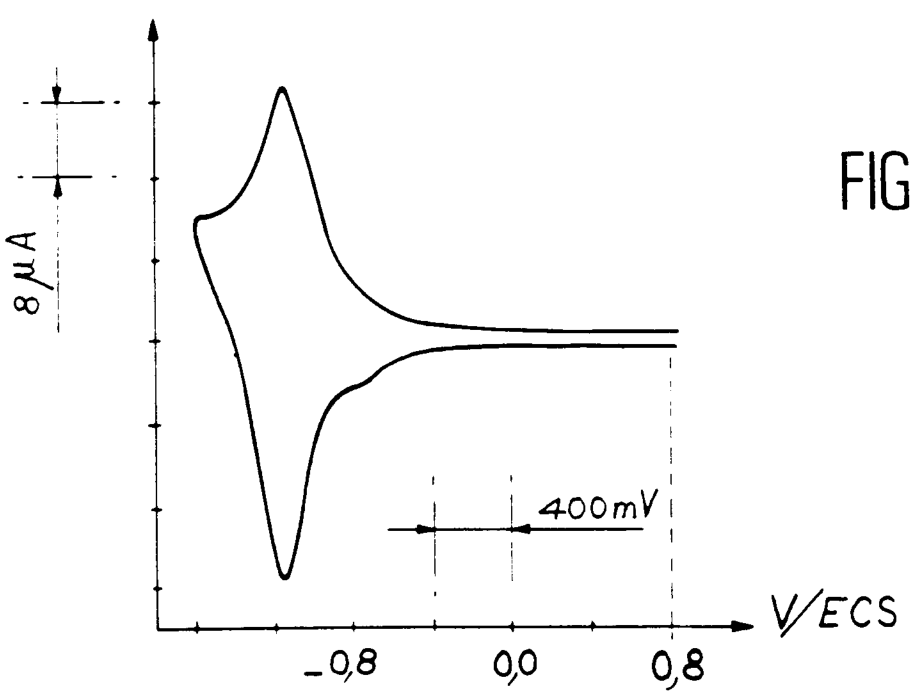


FIG. 2

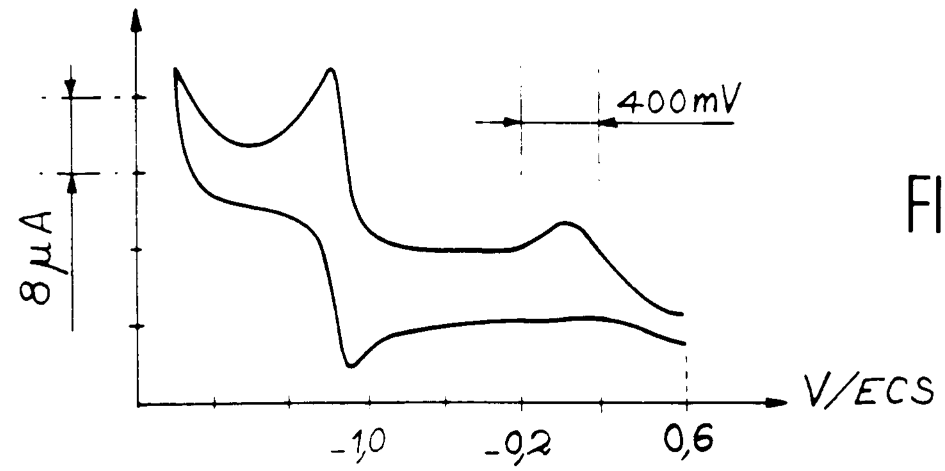


FIG. 3

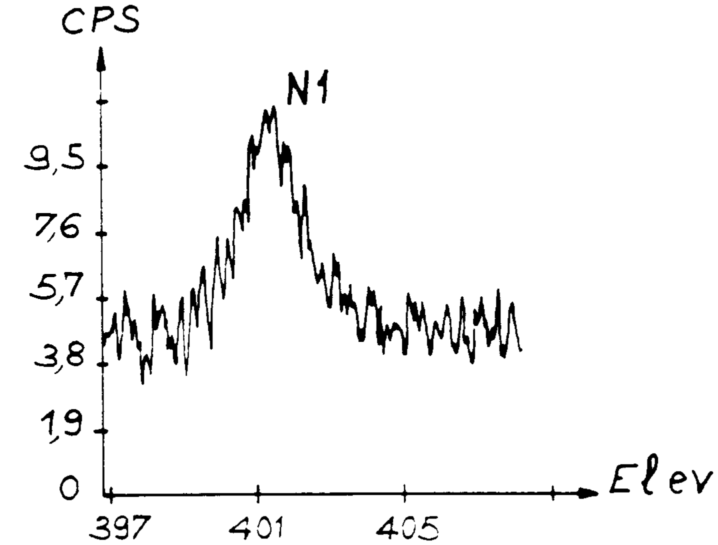


FIG. 4

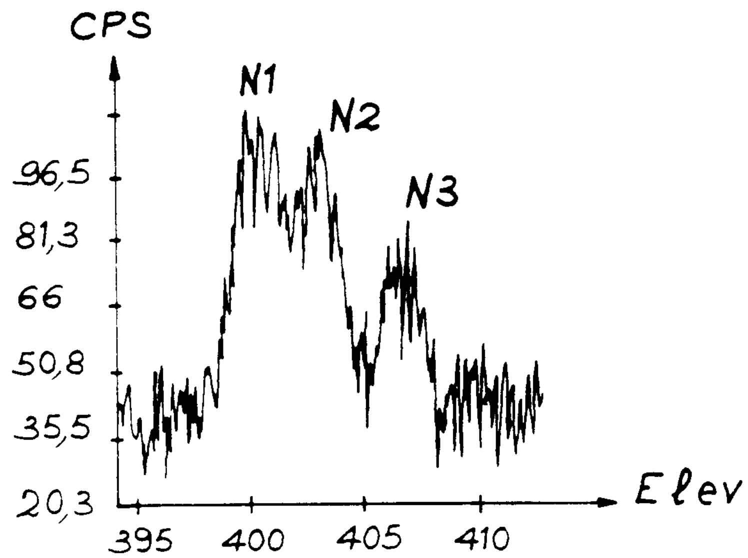


FIG. 5

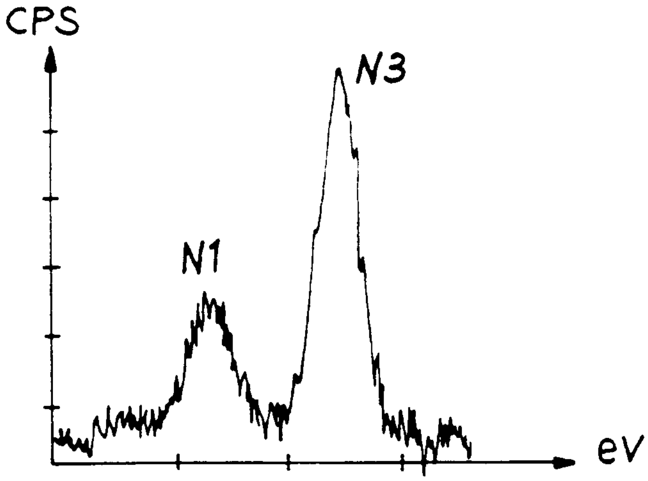


FIG. 6

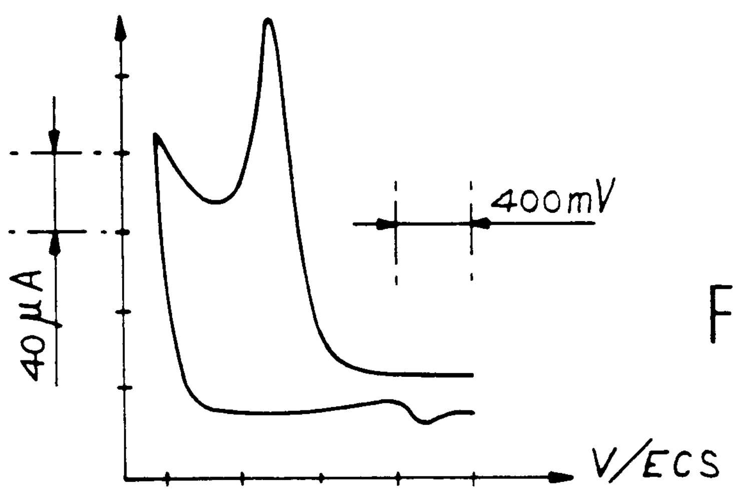


FIG. 7

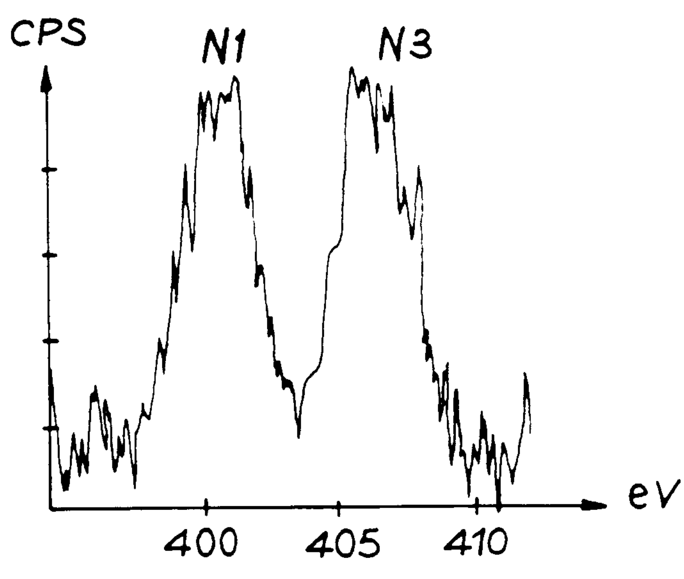


FIG. 8